# EUROPEAN PATENT APPLICATION

(11) **EP 3 495 834 A2**
(43) Date of publication of application: **12.06.2019**
(21) Application number: 18210949.6
(22) Date of filing: 07.12.2018
(51) Int. Cl.: G01S 1/80, G01S 15/74

(54) **SOUND BASED AUTHENTICATION AND DISTANCE MEASUREMENT**

(30) Priority: 08.12.2017 US 201762596249 P
(71) Applicant: Sonarax Technologies Ltd., 3309503 Haifa (IL)
(72) Inventor: Saban, Benny, Haifa (IL); Shofen, Guy, Kiryat Bialik (IL); Eilam, Alon, 4282300 Kadima-Zoran (IL)
(74) Representative: Puchberger & Partner Patentanwälte

(57) **Abstract**

A method for measuring a distance between a first device and a second device, the method may include playing, by a first sound output unit, a first correlation tone; receiving, by a first sound sensing unit, the first correlation tone; detecting a start point of a reception of the first correlation tone; receiving, by the first sound sensing unit, a second correlation tone; wherein the second correlation tone is played by a second sound output unit in response to a reception, by a second sound sensing unit, of the first correlation tone; detecting a start point of a reception of the second correlation tone; receiving, by the first sound sensing unit, information about a processing time of the second device; calculating, by a first processing unit, a timing difference between (i) the start point of the reception of the second correlation tone, and (ii) the start point of the reception of the first correlation tone; and determining the distance between the first device and the second device based on a difference between the timing difference and the processing time of the second device; wherein the first processing unit, the first sound sensing unit and the first sound output unit belong to the first device; and wherein the second sound sending unit and the second sound output unit belong to the second device.

## Description

### CROSS REFERENCE

This application claims priority from US provisional patent serial number 62/596249 filing date December 8 2017.

### BACKGROUND

### Authentication

Authentication processes are usually time consuming and cumbersome. A user is usually required to provide a username and a password during the authentication process.

A transaction is vulnerable to a man-in-the-middle attack that may occur when the user leaves his computerized device before the end of the transaction and after successfully authenticating himself.

### Distance measurement

The distance between devices that communicate with each other may be required for various reasons. For example, clock synchronization between the devices and/or various time-of-arrival based processes relay on an estimate of the distance between the devices.

There is a growing need to provide an accurate and cheap process for determining the distance between devices.

There is a growing need to provide secure authentication processes.

### SUMMARY

There may be provided methods, systems and non-transitory computer readable media as illustrates in the claims and/or the specification and/or drawings.

### Audio-based distance measurement

There may be provided a method for measuring a distance between a first device and a second device, the method may include : playing, by a first sound output unit, a first correlation tone; receiving, by a first sound sensing unit, the first correlation tone; detecting a start point of a reception of the first correlation tone; receiving, by the first sound sensing unit, a second correlation tone; wherein the second correlation tone may be played by a second sound output unit in response to a reception, by a second sound sensing unit, of the first correlation tone; detecting a start point of a reception of the second correlation tone; receiving, by the first sound sensing unit, information about a processing time of the second device; calculating, by a first processing unit, a timing difference between (i) the start point of the reception of the second correlation tone, and (ii) the start point of the reception of the first correlation tone; and determining the distance between the first device and the second device based on a difference between the timing difference and the processing time of the second device; wherein the first processing unit, the first sound sensing unit and the first sound output unit belong to the first device; and wherein the second sound sending unit and the second sound output unit belong to the second device.

The method may include playing by the first sound output unit information about at least one out of the timing difference and the distance between the first and second devices.

The detecting of the start point of the reception of the first correlation tone may include correlating between a digital representation of the first correlation tone and a digital representation of the first correlation tone.

The information about the processing time of the second device may be a second counter value, wherein the second counter belongs to the second device and may be configured to count a period between (i) a reception of the first correlation tone by the second sound sensing unit and (ii) a reception of the second correlation tone by the second sound sensing unit.

The first sound output unit may include at least one speaker and the first sound sensing unit may include at least one microphone.

The first device may be positioned at a fixed spatial relationship from a doorpost, wherein the second device is a user device. The method may include instructing, by a processor of the first device, a lock to unlock a door coupled to the doorpost only when a distance between the door and the user device falls within a predefined range; and unlocking, by the lock and in response to the instruction, the door.

The user device may be the first device. A network unit of a wireless network may be the second device. The distance between the first device and the second device may be distance between the user device and the network unit. The method may include receiving, by the user device and from the network unit, sound signals that represent access metadata; extracting the access metadata from the sound signals; logging to the wireless network using the access metadata; and wherein an execution of at least one of the extracting and the logging may be conditioned by maintaining the distance between the user device and the network unit within a predefined distance range. Conditioned may mean that the extracting and/or the logging may fail (and even terminate) if the distance may be outside the predefined distance range.

The user device may be the first device. An audio source may be the second device. The distance between the first device and the second device may be a distance between the user device and the audio source. The method may include receiving, by the user device and from the audio source, sound signals that represent web asset access metadata; extracting the web asset access metadata from the sound signals; accessing the web asset using the web asset access metadata; and wherein an execution of at least one of the extracting and the accessing may be conditioned by maintaining the distance between the user device and the audio source within a predefined distance range.

The user device may be the first device. An audio source may be the second device. The distance between the first device and the second device may be a distance between the user device and the audio source. The method may include: performing, by the computerized system, a registration process that may include : (a) a first registration phase that may include exchanging sound signals, outputted from the audio source, that embed a first unique value with the user device, and (b) a second registration phase that may include exchanging sound signals, outputted from the audio source, that embed a second unique value with the user device; generating a third unique value; and following a successful registration process, performing by the computerized system, an authentication process that may include exchanging sound signals, that embed the third unique value; and wherein an execution of at least one of the registration process and the authentication process may be conditioned by maintaining the distance between the user device and the audio source within a predefined distance range.

The first registration phase may include (i) generating a first unique message that represents the first unique value; (ii) playing, by a first sound output unit of the computerized system, first sound signals that represent the first unique message; (iii) receiving, by a first sound sensing unit, a second sound signals that convey first information about (a) an identifier of the user device and (c) the first unique value; (iv) validating the first information, by a first processor.

The second registration phase may include (i) following a successful validation of the first information, generating a second unique message that represents the second unique value; (ii) playing, by the first sound output unit, third sound signals that represent the second unique message; (iii) receiving, by the first sound sensing unit, a fourth sound signals that convey second information about the first unique value and the second unique value; (iv) validating the second information.

The user device may be the first device. A selected point of sale may be the second device. The distance between the first device and the second device may be a distance between the user device and the selected point of sale. The method may include receiving, by the user device, a plurality of sound beacons that identify a plurality of point of sale systems of the multiple point of sale systems; wherein the sound beacons of the plurality of sound beacons differ from each other by frequency; selecting, by the user device the selected point of sale system out of the plurality of point of sale systems; participating in at least one instance of an authentication process with the selected point of sale system; completing the transaction if the at least one instance of the authentication process may be successful; terminating the transaction upon a failure of the at least one instance of the authentication process; and wherein an execution of at least one of the selecting, participating and completing may be conditioned by maintaining the distance between the user device and the selected point of sale within a predefined distance range.

There may be provided a first device that may include a first sound sensing unit, a first sound output unit, and a processor; wherein the first sound output unit may be configured to play a first correlation tone; wherein the first sound sensing unit may be configured to receive the correlation tone; wherein the processor may be configured to detect a start point of a reception of the first correlation tone; wherein the first sound sensing unit may be configured to receive, a second correlation tone; wherein the second correlation tone may be played by a second sound output unit in response to a reception, by a second sound sensing unit, of the first correlation tone; wherein the processor may be configured to detect a start point of a reception of the second correlation tone; wherein the first sound sensing unit may be configured to receive information about a processing time of the second device; wherein the processor may be configured to: calculate a timing difference between (i) the start point of the reception of the second correlation tone, and (ii) the start point of the reception of the first correlation tone; and determine the distance between the first device and the second device based on a difference between the timing difference and the processing time of the second device; and wherein the second sound sending unit and the second sound output unit belong to the second device.

The first sound output unit may be configured to play information about at least one out of the timing difference and the distance between the first and second devices.

The processor may be configured to detect the start point of the reception of the first correlation tone by correlating between a digital representation of the first correlation tone and a digital representation of the first correlation tone.

The information about the processing time of the second device may be a second counter value, wherein the second counter belongs to the second device and may be configured to count a period between (i) a reception of the first correlation tone by the second sound sensing unit and (ii) a reception of the second correlation tone by the second sound sensing unit.

The first sound output unit may include at least one speaker and the first sound sensing unit may include at least one microphone.

There may be provided a non-transitory computer program product for measuring a distance between a first device and a second device, wherein the non-transitory computer program product stores instructions for: playing, by a first sound output unit, a first correlation tone; receiving, by a first sound sensing unit, the correlation tone; detecting a start point of a reception of the first correlation tone; receiving, by the first sound sensing unit, a second correlation tone; wherein the second correlation tone may be played by a second sound output unit in response to a reception, by a second sound sensing unit, of the first correlation tone; detecting a start point of a reception of the second correlation tone; receiving, by the first sound sensing unit, information about a processing time of the second device; calculating, by a first processing unit, a timing difference between (i) the start point of the reception of the second correlation tone, and (ii) the start point of the reception of the first correlation tone; and determining the distance between the first device and the second device based on a difference between the timing difference and the processing time of the second device; and wherein the first processing unit, the first sound sensing unit and the first sound output unit belong to the first device; and wherein the second sound sending unit and the second sound output unit belong to the second device.

### Pairing

There may be provided a method for pairing a user device with a wireless network, the method may include : receiving, by the user device, sound signals that represent access metadata; extracting the access metadata from the sound signals; and logging to the wireless network using the access metadata.

During the pairing the user device may communicate with a network entity (such as but not limited to an access node). The pairing may be conditioned by maintaining (during the pairing) a distance between the user device and the network entity that is within a predefined distance range.

The distance between the user device and the network entity may be measured by any of the steps of the audio-based distance measurement. The user device and the network entity may be regarded as the first and second devices of the audio-based distance measurement.

### Accessing a web asset

There may be provided a method for accessing a web asset, the method may include : receiving, by the user device, sound signals that represent web asset access metadata; extracting the web asset access metadata from the sound signals; and accessing the web asset using the web asset access metadata.

During the reception of the sound signals (or any other stage of the accessing) the user device may communicate with an audio source. The accessing may be conditioned by maintaining (during the accessing) a distance between the user device and the audio source that is within a predefined distance range.

The distance between the user device and the audio source may be measured by any of the steps of the audio-based distance measurement. The user device and the audio source may be regarded as the first and second devices of the audio-based distance measurement.

### Authentication

There may be provided a computerized method for authenticating a user device, the method may include : performing, by the computerized system, a registration process that may include (i) a first registration phase that may include exchanging sound signals that embed a first unique value with the user device, and (ii) a second registration phase that may include exchanging sound signals that embed a second unique value with the user device and generating a third unique value; and following a successful registration process, performing by the computerized system, an authentication process that may include exchanging sound signals that embed the third unique value.

The third unique value identifies the user device and may be shared between the user device and the computerized system while being non-accessible to other devices.

The first unique value may be indicative of a one-time user identifier.

The second unique value may be indicative of a user device identifies that may be shared with another computerized system and may be indicative of a one-time user identifier.

The first registration phase may include (i) generating a first unique message that represents the first unique value; (ii) playing, by a first sound output unit of the computerized system, first sound signals that represent the first unique message; (iii) receiving, by a first sound sensing unit, a second sound signals that convey first information about (a) an identifier of the user device and (c) the first unique value; (iv) validating the first information, by a first processor.

The second registration phase may include (i) following a successful validation of the first information, generating a second unique message that represents the second unique value; (ii) playing, by the first sound output unit, third sound signals that represent the second unique message; (iii) receiving, by the first sound sensing unit, a fourth sound signals that convey second information about the first unique value and the second unique value; (iv) validating the second information.

The generating of the third unique value may be conditioned by a successful validation of the second information; wherein the third unique value may be a unique user device identifier.

The method may include performing multiple instances of the authentication process during a transaction; and stopping the transaction upon a failure of at least one instances of the authentication process.

The multiple instances may be spaced apart by less than thirty seconds.

During the authentication process and/or the registration process the user device may communicate with an audio source.

The authentication may be conditioned by maintaining (during the authentication) a distance between the user device and the audio source that is within a predefined distance range.

The registration may be conditioned by maintaining (during the registration) a distance between the user device and the audio source that is within a predefined distance range.

The distance between the user device and the audio source may be measured by any of the steps of the audio-based distance measurement. The user device and the audio source may be regarded as the first and second devices of the audio-based distance measurement.

There may be provided a non-transitory computer program product for authenticating a user device, wherein the non-transitory computer program product stores instructions for: performing, by the computerized system, a registration process that may include (i) a first registration phase that may include exchanging sound signals that embed a first unique value with the user device, and (ii) a second registration phase that may include exchanging sound signals that embed a second unique value with the user device and generating a third unique value; and following a successful registration process, performing by the computerized system, an authentication process that may include exchanging sound signals that embed the third unique value.

There may be provided a method for authenticating a user device, the method may include : generating a first unique message that represents a first unique value; playing, by a first sound output unit, first sound signals that represent the first unique message; receiving, by a first sound sensing unit, a second sound signals that convey first information about (i) an identifier of the user device and (ii) the first unique value; validating the first information, by a first processor; following a successful validation of the first information, generating a second unique message that represents a second unique value; playing, by the first sound output unit, third sound signals that represent the second unique message; receiving, by the first sound sensing unit, a fourth sound signals that convey second information about the first unique value and the second unique value; validating the second information; following a successful validation of the second information, generating a unique user device identifier; and sending the unique device identifier to the user device.

The authentication may be conditioned by maintaining (during the authentication) a distance between the user device and the audio source that is within a predefined distance range.

The validation may be conditioned by maintaining (during the validation) a distance between the user device and the audio source that is within a predefined distance range.

The distance between the user device and the audio source may be measured by any of the steps of the audio-based distance measurement. The user device and the audio source may be regarded as the first and second devices of the audio-based distance measurement.

### Performing a transaction

There may be provided a method for performing a transaction between a user device and a point of sale system of multiple point of sale systems, the method may include : receiving, by the user device, a plurality of sound beacons that identify a plurality of point of sale systems of the multiple point of sale systems; wherein the sound beacons of the plurality of sound beacons differ from each other by frequency; selecting, by the user device a selected point of sale system out of the plurality of point of sale systems; participating in at least one instance of an authentication process with the selected point of sale system; completing the transaction if the at least one instance of the authentication process may be successful; and terminating the transaction upon a failure of the at least one instance of the authentication process.

The at least one instance of the authentication process may include multiple instances of the authentication process.

Each instance of the authentication process may include receiving by the user device sound signals that represent a certain unique value and playing by the user device other sound signals that represent the certain the third unique value and additional metadata stored in the user device.

The selecting of the selected point of sale system may be followed by notifying a user of the user device about the selected point of sale system.

The selecting may be based on a strength of the plurality of sound beacons.

The sound beacons may be sound beacons.

During the reception of the sound signals (or any other stage of the preforming of the transactions) the user device may communicate with a point of sale. The transaction may be conditioned by maintaining (during the transaction) a distance between the user device and the point of sale is within a predefined distance range.

The distance between the user device and the point of sale may be measured by any of the steps of the audio-based distance measurement. The user device and the point of sale may be regarded as the first and second devices of the audio-based distance measurement.

The method may include rejecting by the user device sound beacons (out of the plurality of sound beacons that identify a plurality of point of sale systems) from points of sale that are located outside the predefined range.

The method may include preventing or failing (by the user device and/or by a selected point of sale) at least one instance of an authentication process with the selected point of sale system if the distance between the user device and the selected point of sale is outside the predefined range.

A point of sale (of the multiple points of sale) may select to respond to a user device out of a set of user devices that request to perform a transaction with the point of sale, based on the distances between the point of sale and the user devices of the set. For example- the closest user device may be selected.

There may be provided a device may include a first sound sensing unit, a first sound output unit, and a processor; wherein the first sound sensing unit may be configured to receive a plurality of sound beacons that identify a plurality of point of sale systems of the multiple point of sale systems; wherein the sound beacons of the plurality of sound beacons differ from each other by frequency; wherein the processor may be configured to select a selected point of sale system out of the plurality of point of sale systems; wherein the device may be configured to participate in at least one instance of an authentication process with the selected point of sale system; wherein the processor may be configured to determine to complete the transaction if the at least one instance of the authentication process may be successful, and to terminate the transaction upon a failure of the at least one instance of the authentication process.

There may be provided a non-transitory computer program product that stores instructions for: receiving, by the user device, a plurality of sound beacons that identify a plurality of point of sale systems of the multiple point of sale systems; wherein the sound beacons of the plurality of sound beacons differ from each other by frequency; selecting, by the user device a selected point of sale system out of the plurality of point of sale systems; participating in at least one instance of an authentication process with the selected point of sale system; completing the transaction if the at least one instance of the authentication process may be successful; and terminating the transaction upon a failure of the at least one instance of the authentication process.

### Door control

There may be provided a method for controlling a door, the method may include : receiving, by sound sensing unit, sound signals that represent an access request; determining by the processor, a location of origin of the sound signals; instructing a lock to unlock the door only if the location of origin falls within one or more predefined three-dimensional regions (for example there is a certain distance); and unlocking the door by the lock based on the instruction.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
FIG. 1 illustrates an example of a method;
FIG. 2 illustrates an example of a method;
FIG. 3 illustrates an example of a timing diagram;
FIG. 4 illustrates an example of a method;
FIG. 5 illustrates an example of a method;
FIG. 6 illustrates an example of a method;
FIG. 7 illustrates point of sale systems and a user device;
FIG. 8 illustrates an example of a method;
FIG. 9 illustrates an example of a user device and transmitters;
FIG. 10 illustrates an example of a method;
FIG. 11 illustrates an example of a method;
FIG. 12 illustrates an example of a method;
FIG. 13 illustrates an example of a door, a lock, and a user device; and
FIG. 14 illustrates an example of two devices.

### DETAILED DESCRIPTION OF THE DRAWINGS

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

Any reference in the specification to a system should be applied mutatis mutandis to a method that can be executed by the system.

Because the illustrated embodiments of the present invention may for the most part, be implemented using electronic components and circuits known to those skilled in the art, details will not be explained in any greater extent than that considered necessary as illustrated above, for the understanding and appreciation of the underlying concepts of the present invention and in order not to obfuscate or distract from the teachings of the present invention.

Any reference in the specification to a method should be applied mutatis mutandis to a system capable of executing the method and should be applied mutatis mutandis to a non-transitory computer readable medium that stores instructions that once executed by a computer result in the execution of the method.

Any reference in the specification to a system should be applied mutatis mutandis to a method that can be executed by the system and should be applied mutatis mutandis to a non-transitory computer readable medium that stores instructions that once executed by a computer result in the execution of the method.

The term "sound" may include ultrasound, non-ultrasound, within a range perceivable by humans, outside the range perceivable by humans, and the like.

### Sound-based distance measurement between devices.

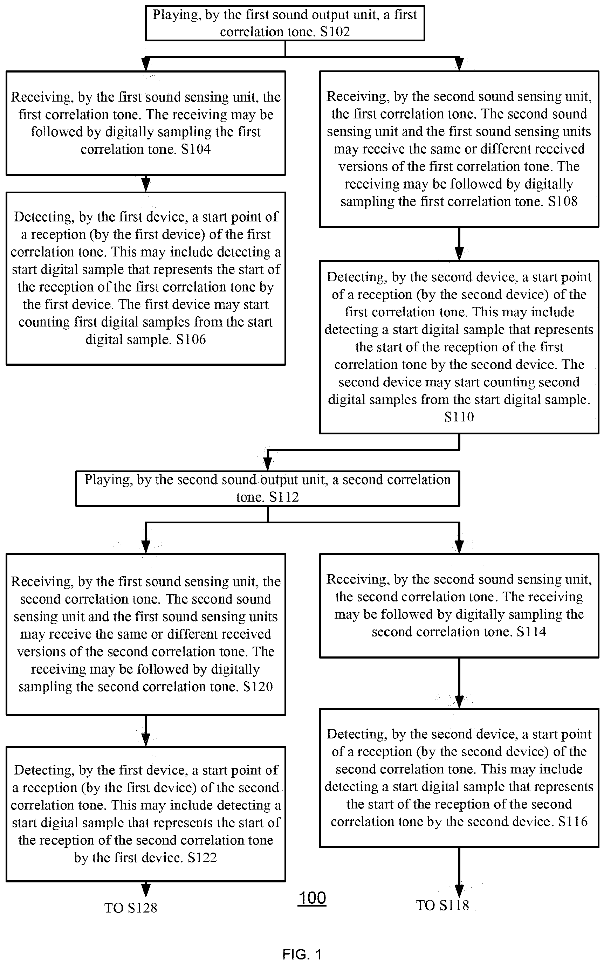

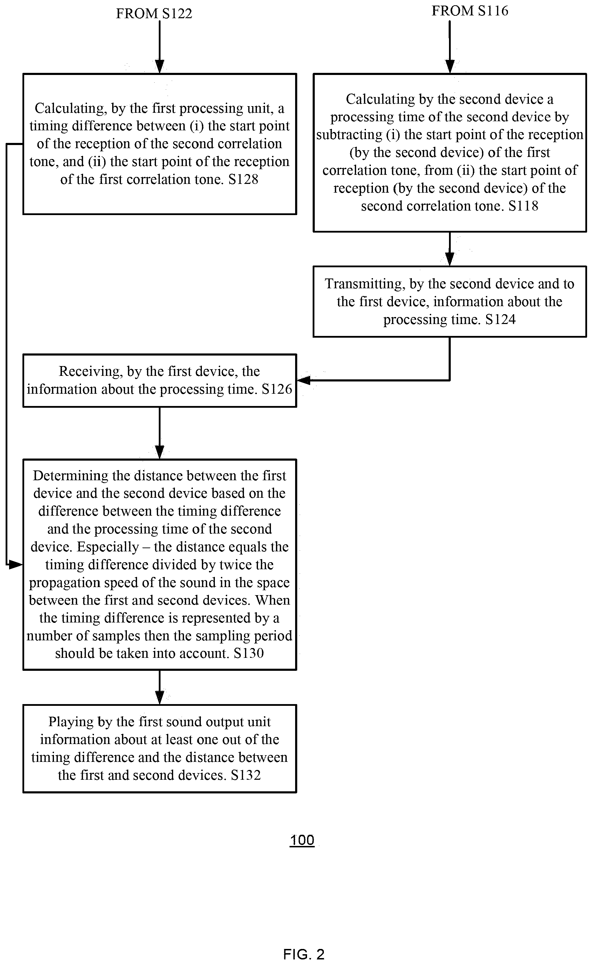

Figures 1 and 2 illustrate an example of method 100 for measuring a distance between a first device and a second device.

Each one of the first and second devices may be a mobile phone, a media player, a medical device, a mobile communication device, and the like. At least one of the first and second devices may be stationary. The first and second devices may be equal to each other but may differ from each other. The first device and/or the second device may be operated by a user - and hence may be referred to as a user device.

The first device includes (i) a first sound output unit such as one or more first speakers, (ii) a first sound sensing unit such as one or more first microphones, (iii) a first processor.

The second device includes (i) a second sound output unit such as one or more second speakers, (ii) a second sound sensing unit such as one or more second microphones, (iii) a second processor.

In the following description one or more correlation tones are played and one or more received versions of the correlation tones are received. For simplicity of explanation the received version of a correlation tone is referred to as the correlation tone.

Method 100 may include the following steps:
a. Playing, by the first sound output unit, a first correlation tone. S102
b. Receiving, by the first sound sensing unit, the first correlation tone. The receiving may be followed by digitally sampling the first correlation tone. S104
c. Detecting, by the first device, a start point of a reception (by the first device) of the first correlation tone. This may include detecting a start digital sample that represents the start of the reception of the first correlation tone by the first device. The first device may start counting digital samples from the start digital sample. S106
d. Receiving, by the second sound sensing unit, the first correlation tone. The receiving may be followed by digitally sampling the first correlation tone. S108
e. Detecting, by the second device, a start point of a reception (by the second device) of the first correlation tone. This may include detecting a start digital sample that represents the start of the reception of the first correlation tone by the second device. The second device may start counting digital samples from the start digital sample. S110
f. Playing, by the second sound output unit, a second correlation tone. S112
g. Receiving, by the second sound sensing unit, the second correlation tone. The receiving may be followed by digitally sampling the second correlation tone. S 114
h. Detecting, by the second device, a start point of a reception (by the second device) of the second correlation tone. This may include detecting a start digital sample that represents the start of the reception of the second correlation tone by the second device. S116
i. Calculating by the second device a processing time of the second device by subtracting (i) the start point of the reception (by the second device) of the first correlation tone, from (ii) the start point of reception (by the second device) of the second correlation tone. S118
j. Receiving, by the first sound sensing unit, the second correlation tone. The receiving may be followed by digitally sampling the second correlation tone. S120
k. Detecting, by the first device, a start point of a reception (by the first device) of the second correlation tone. This may include detecting a start digital sample that represents the start of the reception of the second correlation tone by the first device. S122
l. Transmitting, by the second device and to the first device, information about the processing time. The processing time may also be referred to delay associated with the second device. S124
m. Receiving, by the first device, the information about the processing time. S126
n. Calculating, by the first processing unit, a timing difference between (i) the start point of the reception of the second correlation tone, and (ii) the start point of the reception of the first correlation tone. S128
o. Determining the distance between the first device and the second device based on the difference between the timing difference and the processing time of the second device. Especially - the distance equals the timing difference divided by twice the propagation speed of the sound in the space between the first and second devices. When the timing difference is represented by a number of samples then the sampling period should be taken into account (for example - timing difference = number of digital samples/sampling period). S130
p. Playing by the first sound output unit information about at least one out of the timing difference and the distance between the first and second devices. S132

The detecting of a start point of a reception may include correlation. For example, step 106 may include correlating between a digital representation of the (received) first correlation tone and a digital representation of the (transmitted) first correlation tone.

The information about the processing time of the second device may be a second counter value. The second counter may belong to the second device and may be configured to count a period between (i) a reception of the first correlation tone by the second sound sensing unit and (ii) a reception of the second correlation tone by the second sound sensing unit.

It should be noted that during steps 102-132 the first device acts as a master and the second device may act as a slave. The allocation of master and slave roles may change over time, may be dictated to at least one of the first and second devices, may be negotiated by the first and second devices, may be determined in a random manner, in a pseudo random manner of in a deterministic manner.

The first and second devices may operate in various operational modes. One of these operational modes may be a distance determination operational mode. Other operational modes may be associated with other functions, with the same or other power consumptions, and the like. Other operational modes may include idle mode, sound sensing unit idle mode, sound sensing unit active mode, sound output unit idle mode, sound output unit active mode, and the like.

During the distance determination operational mode, any of the first and second device may activate and/or deactivate its sound sensing unit and/or sound output unit.

The first and/or second correlation tones may be any combination of sound signals. The first and/or second correlation tones may have a relatively sharp autocorrelation function.

It should be noted that the sampling rate of any received sound signal may fulfill the Nyquist condition - but this is not necessarily so. For example - sampling can be none at a rate of 44,100 samples per second - or any other sampling rate.

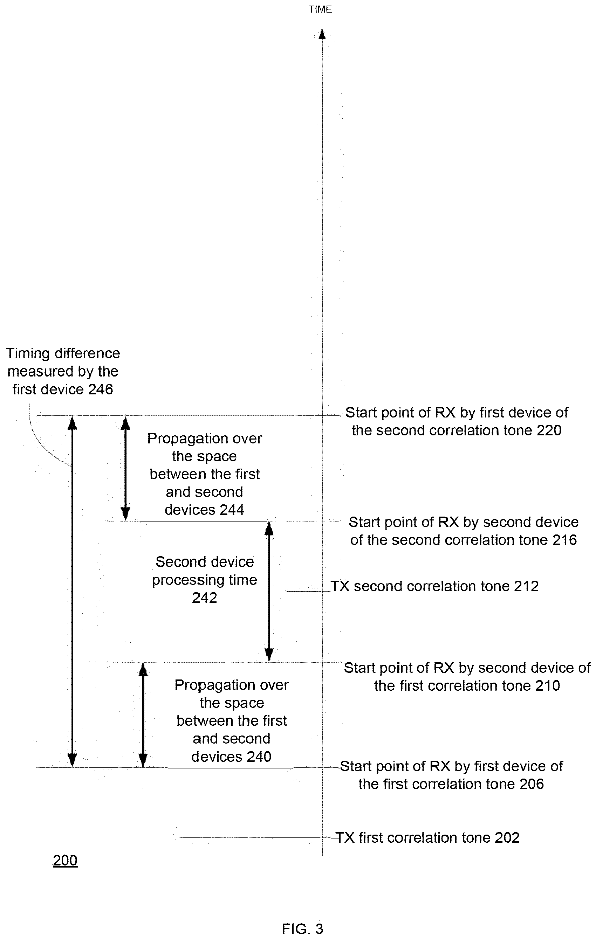

Figure 3 is a timing diagram 200 illustrating some of the points of time that are related to method 100.

Timing diagram 200 illustrates the following events / time periods:
a. Playing, by the first sound output unit, a first correlation tone. 202
b. Start point of a reception (by the first device) of the first correlation tone. 206
c. Start point of a reception (by the second device) of the first correlation tone. 210
d. Playing, by the second sound output unit, a second correlation tone. 212
e. Start point of a reception (by the second device) of the second correlation tone. 216
f. Start point of a reception (by the first device) of the second correlation tone. 220
g. Processing time of the second device. 242
h. Timing difference between (i) the start point of the reception of the second correlation tone, and (ii) the start point of the reception of the first correlation tone. 246.
i. Propagation over the space between the first and second devices - related to the first correlation tone. 240.
j. Propagation over the space between the first and second devices - related to the second correlation tone. 244.

The distance measurement is highly accurate, is simple, does not require clock synchronization between the devices and may be executed even without dedicated hardware.

### Authentication.

There may be provided a secure authentication method.

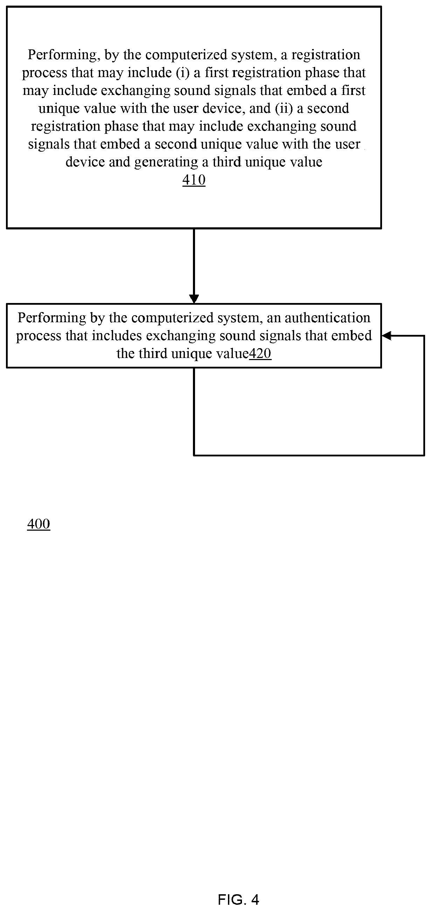

Figure 4 illustrates method 400 for registration and authentication.

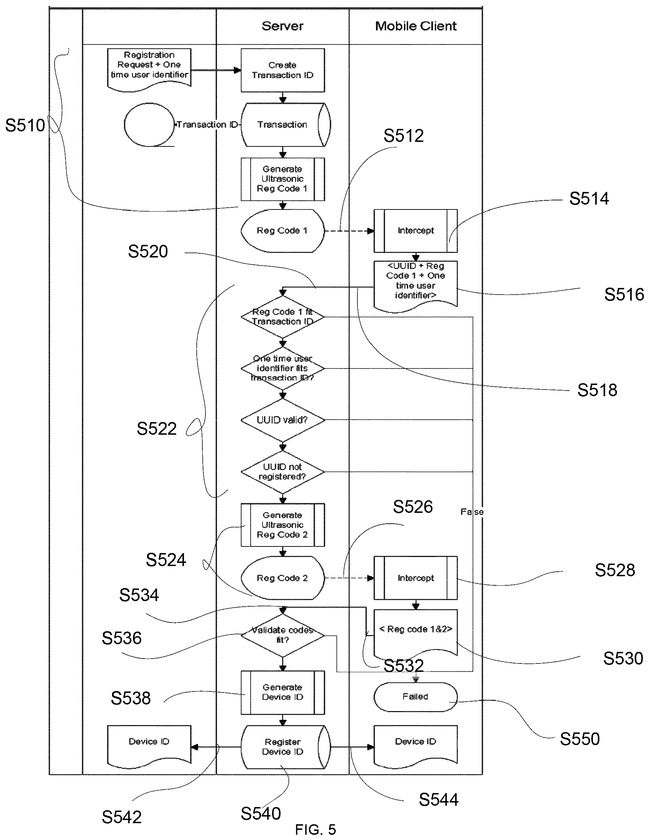

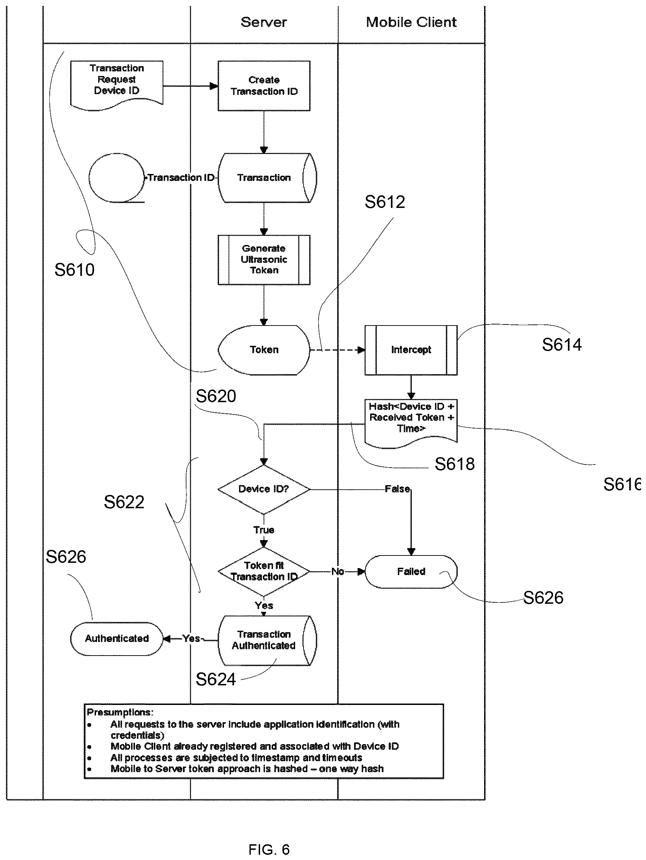

Figure 5 illustrates a method for registering a user device. Figure 6 illustrates a method for authenticating a user device.

Each one of figures 5 and 6 includes a table that has three columns. The rightmost column illustrates operations executed by a user device, the middle column illustrates operations executed by a server and the right column illustrates operations that may be executed by a server of by another entity. A server is a non-limiting example of a computerized system. The server may include a sound sensing unit and/or a sound output unit or may be electrically coupled to such units.

Referring to figure 4 - the authentication may be conditioned upon a successful registration process.

Method 400 may include step 410 of performing, by the computerized system, a registration process that may include:
a. A first registration phase that may include exchanging sound signals that embed a first unique value with the user device.
b. A second registration phase that may include exchanging sound signals that embed a second unique value with the user device and generating a third unique value.

The first unique value may be indicative of a one-time user identifier.

The second unique value may be indicative of a user device identifies that is shared with another computerized system and is indicative of a one-time user identifier.

The third unique value may identify the user device and is shared between the user device and the computerized system while being non-accessible to other devices.

A unique value may be indicative of a certain content by including the content, including a processed content, including a decrypted content, including retrieval information for retrieving the content, and the like.

An example of the first registration phase (of step 410) will be explained with reference to figure 5. The first phase may include:
a. Generating a first unique message that represents the first unique value. S510. In figure 5 the first unique value is a first registration code that represents a transaction identifier. The transaction identifier is generated based on a one-time user identifier.
b. Playing, by a sound output unit of the computerized system, first sound signals that represent the first unique message. S512
c. Receiving, by a sound output unit of the user device, the first sound signals. S514
d. Generating, by the user device, first information about an identifier of the user device and the first unique value. S516. In figure 5 the identifier of the user device is a UUID and the first information also includes the first registration code and the one-time user identifier.
e. Playing, by a sound output unit of the user device, second sound signals. S518
f. Receiving, by the sound sensing unit of the computerized system, the second sound signals. S520
g. Validating the first information, by a processor of the computerized system. S522. In figure 5 the validating includes checking (i) if the first registration code is associated with the transaction identifier, (ii) if the one-time user identifier of the first information is associated with the transaction identifier, (iii) whether the UUID is valid and whether the UUID was registered or not.

An example of the second registration phase (of step 410) will be explained with reference to figure 5.

The second registration phase may include:
a. Following a successful validation of the first information, generating a second unique message that represents the second unique value. S524
b. Playing, by a first sound output unit of the computerized system, third sound signals that represent the second unique message. S526
c. Receiving, by the sound output unit of the user device, the third sound signals. S528
d. Generating, by the user device, second information about the first unique value and the second unique value S530
e. Playing, by the sound output unit of the user device, signals that convey the second information. S532
f. Receiving, by the sound sensing unit of the computerized system, the fourth sound signals. S534
g. Validating the second information. S536.
h. Following a successful validation of the second information, generating a third unique value. S538.
i. Registering and /or distributing the third unique value. S540, S542 and S544.
j. If validation step S522 or S536 fail then the method proceeds to failure step S550.

It should be noted that any information mentioned above may include timing information such as one or more timestamps.

Following a successful completion of the registration the method may proceed to step 420 of performing by the computerized system, an authentication process that includes exchanging sound signals that embed the third unique value.

Multiple repetitions of step 420 may be executed after the successful registration.

A successful authentication process may be followed by performing an authentication-conditioned process. The authentication conditioned process may be completed and/or initiated only after a successful completion of the authentication process.

A non-limiting example of an authentication-conditioned process is a transaction - for example a purchase of an item using the user devices.

It should be noted that during the execution of the authentication-conditioned process one or more additional authentication processes may be executed. A failure of one (or another predetermined number of) authentication processes may terminate the authentication-conditioned process.

The time between one authentication process to another may be fixed, may change between one authentication process and another, may be few seconds ling, fewer than one second or longer than one second.

The repetition of the authentication processes increases the security level of the authentication-conditioned process and may prevent a man in the middle attack.

An example of the authentication phase (of step 420) will be explained with reference to figure 6.
a. Generating a unique message that represents a fifth unique value. S610. In figure 6 the fifth unique value is a first token that represents a transaction identifier.
b. Playing, by a sound output unit of the computerized system, fifth sound signals that represent the fifth unique message. S612
c. Receiving, by a sound output unit of the user device, the fifth sound signals. S614
d. Generating, by the user device, fifth information about the third unique value (such as an identifier of the user device that is shared between the user device and the server). S616. In figure 6 the fifth information also includes the first token.
e. Playing, by the sound output unit of the user device, sixth sound signals that represents the first information. S618
f. Receiving, by a sound sensing unit of the user device, the sixth sound signals. S620
g. Validating the fifth information, by a processor of the computerized system. S622. In figure 6 the validating includes checking if the fifth information is associated with the third unique value and if the first token (also represented by the fifth information) matches the first toke (previously generated by the computerized system).
h. If the validation succeeds the authentication is completed. S624 and S626. Else - the validation fails. S626.

It should be noted that any information mentioned above may include timing information such as a timestamp.

### Multiple Point of sale systems

There may be provided a method for completing a transaction using a point of sale system. A point of sale system facilitates purchase of goods. A point of sale system may include a cash register and/or a credit card reader and/or any other man machine interface for completing a purchase. When using sound to convey sale related information some of previously mentioned items (such as credit card reader) may be omitted - and the user device may be used to convey funds from the user.

A point of sale system may include one or more microphones, one or more speakers and a computer.

When there are provided multiple adjacent point of sale the user may be automatically directed to a selected point of sale - which speeds up the purchase. Different beacon frequencies are assigned to different point of sale systems. Each point of sale system transmits a sound beacon that identifies the point of sale system. Different sound beacons are transmitted by different point of sale systems. A user device may receive one or more sound beacons and may select, by applying any selection process, between the sound beacon - therefore selecting a selected point of sale system.

The selection may be made in a random manner, in a pseudo random manner and/or a determined manner. For example - the user device may select the strongest sound beacon, the beacon that is indicative of the closest point of sale system to the device, and the like.

After the point of sale system is selected the user device may generate an audio and/or visual alert informing the user which point of sale system to select.

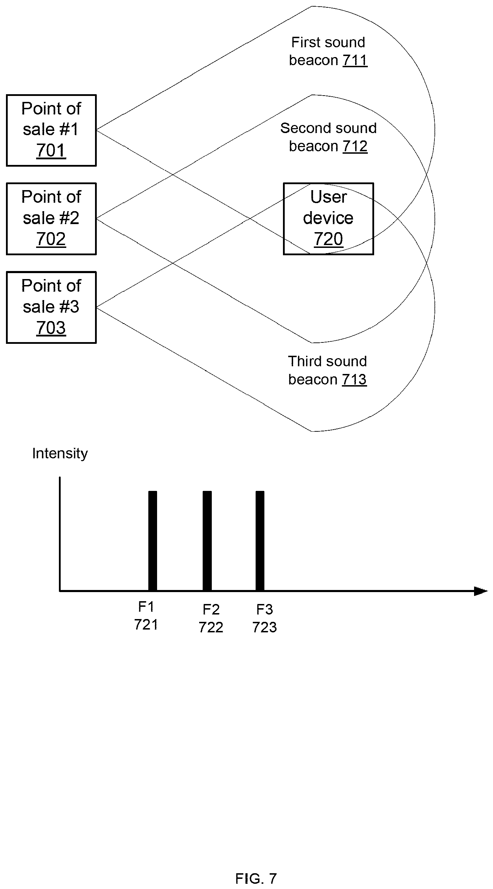

Figure 7 illustrates three point of sale systems 701, 702 and 703 that transmit sound beacons 711, 712 and 713. The sound beacons overlap and the user device 720 is positioned at the overlap area.

It is noted that the number of point of sale systems may be two or may exceed three, and that the user device may receive any number of sound beacons - one, a part of the sound beacons or all the sound beacons.

Figure 7 also shows that the sound beacons 711, 712 and 713 are transmitted at different frequencies F1 721, F2 722 and F3 723 respectively.

The user device and the selected point of sale system may attempt to perform a transaction - and may perform any authentication process- including any of the mentioned above authentication processes.

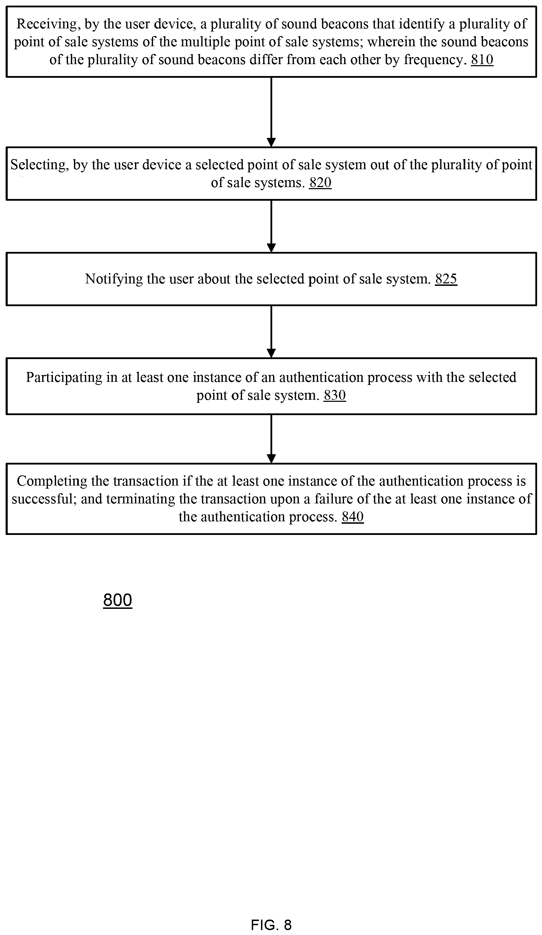

Figure 8 illustrates an example of method 800.

Method 800 is for performing a transaction between a user device and a point of sale of multiple point of sale systems.

Method 800 may include at least one the following steps:
a. Receiving, by the user device, a plurality of sound beacons that identify a plurality of point of sale systems of the multiple point of sale systems; wherein the sound beacons of the plurality of sound beacons differ from each other by frequency. S810
b. Selecting, by the user device a selected point of sale system out of the plurality of point of sale systems. S820
c. Notifying the user about the selected point of sale system. S825
d. Participating in at least one instance of an authentication process with the selected point of sale system. S830. The at least one instance of the authentication process may include multiple instances of the authentication process. Each instance of the authentication process may include receiving by the user device sound signals that represent a certain unique value and playing by the user device other sound signals that represent the certain the third unique value and additional metadata stored in the user device.
e. Completing the transaction if the at least one instance of the authentication process is successful; and terminating the transaction upon a failure of the at least one instance of the authentication process. S840

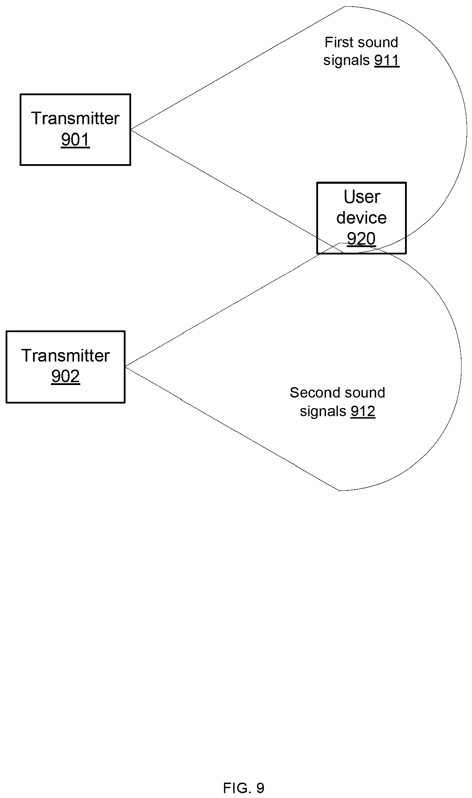

Figure 9 illustrates an example providing information by using sound signals in various scenarios.

In one scenario, access information such as user identifier and password may be conveyed by the sound signals. A user device may extract the access information and use the access information to automatically log in to a wireless network. The sound signals may be transmitted by transmitters.

In a second scenario, a web asset (such as a web site, web page, and the like) may be automatically accessed using web asset metadata that is conveyed over sound signals.

Figure 9 illustrates transmitters 901 and 902 that transmit first and second sound signals denoted 911 and 912 that convey information and/or metadata such as access information and/or web asset metadata. The first and second sound signals 911 and 912 may be the same, may have the same frequency, may convey different content and/or may be of different frequencies.

User 920 device may receive the sound signals from at least one of the transmitter and may react to the information - for example by logging into a wireless network and/or accessing a web asset.

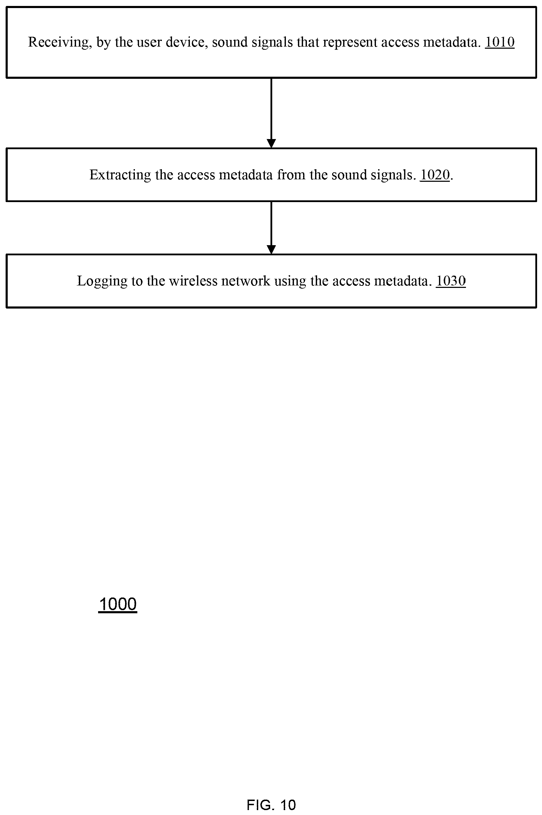

Figure 10 illustrates an example of method 1000.

Method 1000 is for pairing a user device with a wireless network. The wireless network may be any wireless network including but not limited to a local area network, a wide area network, a Wi-Fi network, a Bluetooth based network, and the like.

Method 1000 may include at least one of the following steps:
a. Receiving, by the user device, sound signals that represent access metadata. S1010
b. Extracting the access metadata from the sound signals. S1020.
c. Logging to the wireless network using the access metadata. S1030

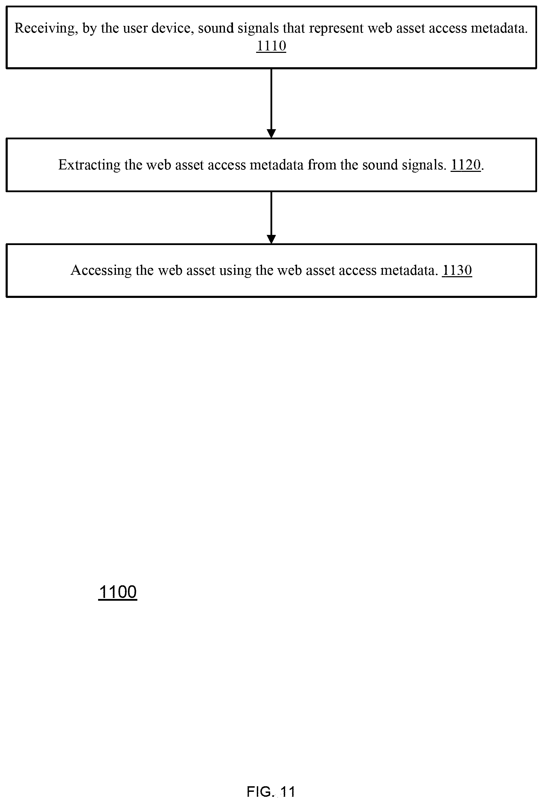

Figure 11 illustrates an example of method 1100.

Method 1100 is for accessing a web asset.

Method 1100 may include at least one of the following steps:
a. Receiving, by the user device, sound signals that represent web asset access metadata. S1110
b. Extracting the web asset access metadata from the sound signals. S1120
c. Accessing the web asset using the web asset access metadata. S1130

A selective location based system for locking and unlocking a door that is based on sound signals may be provided.

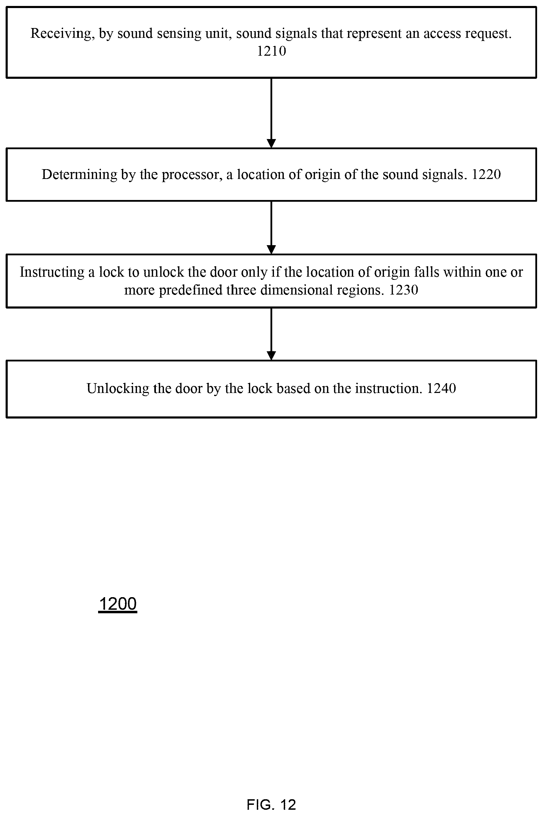

Figure 12 illustrates an example of method 1200.

Method 1200 is for controlling a door.

Method 1200 may include at least one of the following steps:
a. Receiving, by sound sensing unit, sound signals that represent an access request. The sound sensing unit may include one or more microphones. Using multiple microphones may increase the accuracy of location determination. The sound sensing unit may be connected to the door, belong to the door or be at a known spatial relationship with the door and/or the frame of the door. S1210
b. Determining by the processor, a location of origin of the sound signals. S1220
c. Instructing a lock to unlock the door only if the location of origin falls within one or more predefined three-dimensional regions. S1230
d. Unlocking the door by the lock based on the instruction. S1240

The term door may mean any physical barrier or physical interface that can be selectively locked or unlocked.

There may also be provided a sound output unit that may be connected to the door, belong to the door and may be located close to the sound sensing unit (close enough to be considered at the same distance as the sound sensing unit from the user device).

The sound output unit and the sound sensing unit may be regarded as a second device while the user device may be regarded as a first device. The mentioned above sound based distance method may be applied to determine the distance between the door and the user device.

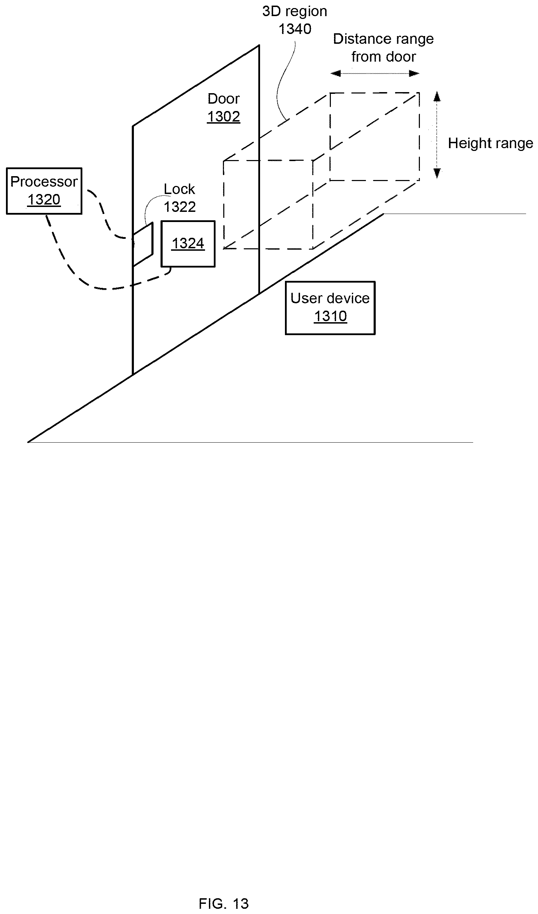

Figure 13 illustrates door 1302, lock 1322, sound sensing unit 1324, processor 1320, user device 1310 and a three-dimensional region ("3D region) 1340. The 3D region may have any shape and/or size. In figure 13 it is a box that has a height range, a distance (from door) range and a width range.

In figure 13 the user device 1310 is located outside the 3D region and the processor will not instruct the lock to unlick the door.

The user device and the system that includes the processor, microphone and lock may perform any authentication process mentioned in the application.

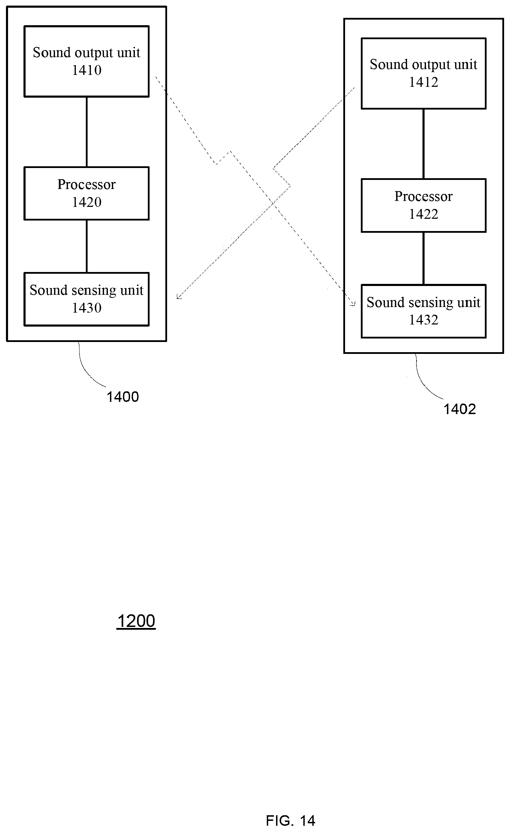

Figure 14 illustrates devices 1400 and 1402- each including a sound sensing unit 1430 and 1432 respectively, a processor 1420 and 1422 respectively, as well as sound output unit 1410 and 1412 respectively.

Any one of devices 1400 and 1402 may execute or at least participate in any of the methods illustrated in the specification.

### Positioning

There may be provided a positioning method. The positioning method may include:
a. Calculating the distance between multiple devices. The distance between at least one pair of devices (of the multiple devices) is calculated by performing an audio-based distance measurement (for example - of method 100).
b. Determining, based on distances between the multiple devices the spatial relationship between the multiple devices.

The distances between a certain device and two (or more) other devices of the multiple devices may be calculated by performing an audio-based distance measurement (for example - of method 100). The triangulation may be used to determine the spatial relationship between the certain device and the two (or more) other devices.

If the locations of the two (or more) other devices are known- then the location of the certain device may be determined.

The certain device may be movable while the two (or more) other devices may be static.

Accordingly - by using triangulation, the method may include determining a position of a non-stationary device with high accuracy based on distances from two or more stationary devices of known locations. The distances are measured performing an audio-based distance measurement (for example - of method 100).

It should be noted that when the location between devices is known then any of the mentioned above methods may be conditioned by a position of one device (within a predefined volume of any shape and/or size) and not necessarily within a certain distance range.

Any combination of any component of any component and/or unit of systems that is illustrated in any of the figures and/or specification and/or the claims may be provided.

Any combination of any systems illustrated in any of the figures and/or specification and/or the claims may be provided.

Any combination of steps, operations and/or methods illustrated in any of the figures and/or specification and/or the claims may be provided.

Any combination of operations illustrated in any of the figures and/or specification and/or the claims may be provided.

For example- distance measurement executed by method 100 may be included in any one of methods 400, 500, 600, 800, 1000, 1100 and 1200.

For example - a successful completions of one or more steps of any method of methods 400, 500, 600, 800, 1000, 1100 and 1200 may be conditioned by maintaining a distance between first and second devices within a predefined distance range. The distance is measured by executing method 100 or at least some of the steps of method 100. The distance may be measured multiple times.

The predefined distance range may be determined in any manner - by the user, by the user device, by a computerized system that communicated with the user device, by an administrator, by a third party.

The predefined distance range may change over time. The predefined distance range may range between a minimal distance to a maximal distance, the minimal distance may range between zero and tens of meters, the maximal distance exceeds the minimal distance.

Any other combination of any steps of methods 400, 500, 600, 800, 1000, 1100 and 1200 may be provided.

It should be noted that if the position of a device is determined (for example by calculating the distance between the device and two or more other devices (the device and the two or more other devices belong to a group) than the successful completions of one or more steps of any method of methods 400, 500, 600, 800, 1000, 1100 and 1200 may be conditioned by maintaining a certain spatial relationship between the device and the two or more other devices. For example the device may be located in a predefined volume that is defined in relation to the two or more other devices. The distance between each pair of devices of the group is measured by executing method 100 or at least some of the steps of method 100. The distance may be measured multiple times.

In the foregoing specification, the invention has been described with reference to specific examples of embodiments of the invention. It will, however, be evident that various modifications and changes may be made therein without departing from the broader spirit and scope of the invention as set forth in the appended claims.

Moreover, the terms "front," "back," "rear" "top," "bottom," "over," "under" and the like in the description and in the claims, if any, are used for descriptive purposes and not necessarily for describing permanent relative positions. It is understood that the terms so used are interchangeable under appropriate circumstances such that the embodiments of the invention described herein are, for example, capable of operation in other orientations than those illustrated or otherwise described herein.

Those skilled in the art will recognize that the boundaries between various components are merely illustrative and that alternative embodiments may merge various components or impose an alternate decomposition of functionality upon various components. Thus, it is to be understood that the architectures depicted herein are merely exemplary, and that in fact many other architectures can be implemented which achieve the same functionality.

Any arrangement of components to achieve the same functionality is effectively "associated" such that the desired functionality is achieved. Hence, any two components herein combined to achieve a particular functionality can be seen as "associated with" Each other such that the desired functionality is achieved, irrespective of architectures or intermedial components. Likewise, any two components so associated can also be viewed as being "operably connected," or "operably coupled," to Each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps than those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

The terms "including", "comprising", "having", "consisting" and "consisting essentially of" are used in an interchangeable manner. For example- any method may include at least the steps included in the figures and/or in the specification, only the steps included in the figures and/or the specification.

## Claims

1. A method for measuring and using a distance between a first device and a second device, the method comprises:
playing, by a first sound output unit, a first correlation tone;
receiving, by a first sound sensing unit, the first correlation tone;
detecting a start point of a reception of the first correlation tone;
receiving, by the first sound sensing unit, a second correlation tone; wherein the second correlation tone is played by a second sound output unit in response to a reception, by a second sound sensing unit, of the first correlation tone;
detecting a start point of a reception of the second correlation tone;
receiving, by the first sound sensing unit, information about a processing time of the second device;
calculating, by a first processing unit, a timing difference between (i) the start point of the reception of the second correlation tone, and (ii) the start point of the reception of the first correlation tone; and
determining the distance between the first device and the second device based on a difference between the timing difference and the processing time of the second device;
wherein the first processing unit, the first sound sensing unit and the first sound output unit belong to the first device; and
wherein the second sound sending unit and the second sound output unit belong to the second device.

2. The method according to claim 1 further comprising playing by the first sound output unit information about at least one out of the timing difference and the distance between the first and second devices.

3. The method according to claim 1 wherein the detecting of the start point of the reception of the first correlation tone comprises correlating between a digital representation of the first correlation tone and a digital representation of the first correlation tone.

4. The method according to claim 1 wherein the information about the processing time of the second device is a second counter value, wherein the second counter belongs to the second device and is configured to count a period between (i) a reception of the first correlation tone by the second sound sensing unit and (ii) a reception of the second correlation tone by the second sound sensing unit.

5. The method according to claim 1 wherein the first sound output unit comprises at least one speaker and the first sound sensing unit comprises at least one microphone.

6. The method according to claim 1 wherein the first device is positioned at a fixed spatial relationship from a doorpost, wherein the second device is a user device; and wherein the method comprises:
instructing, by a processor of the first device, a lock to unlock a door coupled to the doorpost only when a distance between the door and the user device falls within a predefined range; and
unlocking, by the lock and in response to the instruction, the door.

7. The method according to claim 1 wherein the user device is the first device, wherein a network unit of a wireless network is the second device; and wherein the distance between the first device and the second device is a distance between the user device and the network unit; and wherein the method comprises:
receiving, by the user device and from the network unit, sound signals that represent access metadata;
extracting the access metadata from the sound signals;
logging to the wireless network using the access metadata; and
wherein an execution of at least one of the extracting and the logging is conditioned by maintaining the distance between the user device and the network unit within a predefined distance range.

8. The method according to claim 1 wherein the user device is the first device, wherein an audio source is the second device; and wherein the distance between the first device and the second device is a distance between the user device and the audio source; wherein the method comprises:
receiving, by the user device and from the audio source, sound signals that represent web asset access metadata;
extracting the web asset access metadata from the sound signals;
accessing the web asset using the web asset access metadata; and
wherein an execution of at least one of the extracting and the accessing is conditioned by maintaining the distance between the user device and the audio source within a predefined distance range.

9. The method according to claim 1 wherein the user device is the first device, wherein an audio source is the second device, and wherein the and wherein the distance between the first device and the second device is a distance between the user device and the audio source; wherein the method comprises: performing, by the computerized system, a registration process that comprises: (a) a first registration phase that comprises exchanging sound signals, outputted from the audio source, that embed a first unique value with the user device, and (b) a second registration phase that comprises exchanging sound signals, outputted from the audio source, that embed a second unique value with the user device; generating a third unique value; and following a successful registration process, performing by the computerized system, an authentication process that comprises exchanging sound signals, that embed the third unique value; and wherein an execution of at least one of the registration process and the authentication process is conditioned by maintaining the distance between the user device and the audio source within a predefined distance range.

10. The method according to claim 9 wherein the first registration phase comprises (i) generating a first unique message that represents the first unique value; (ii) playing, by a first sound output unit of the computerized system, first sound signals that represent the first unique message; (iii) receiving, by a first sound sensing unit, a second sound signals that convey first information about (a) an identifier of the user device and (c) the first unique value; (iv) validating the first information, by a first processor.

11. The method according to claim 10 wherein the second registration phase comprises (i) following a successful validation of the first information, generating a second unique message that represents the second unique value; (ii) playing, by the first sound output unit, third sound signals that represent the second unique message; (iii) receiving, by the first sound sensing unit, a fourth sound signals that convey second information about the first unique value and the second unique value; (iv) validating the second information.

12. The method according to claim 1 wherein the user device is the first device, wherein a selected point of sale is the second device; and wherein the distance between the first device and the second device is a distance between the user device and the selected point of sale; wherein the method comprises:
receiving, by the user device, a plurality of sound beacons that identify a plurality of point of sale systems of the multiple point of sale systems; wherein the sound beacons of the plurality of sound beacons differ from each other by frequency;
selecting, by the user device the selected point of sale system out of the plurality of point of sale systems;
participating in at least one instance of an authentication process with the selected point of sale system;
completing the transaction if the at least one instance of the authentication process is successful;
terminating the transaction upon a failure of the at least one instance of the authentication process; and
wherein an execution of at least one of the selecting, participating and completing is conditioned by maintaining the distance between the user device and the selected point of sale within a predefined distance range.

13. A first device that comprises a first sound sensing unit, a first sound output unit, and a processor;
wherein the first sound output unit is configured to play a first correlation tone;
wherein the first sound sensing unit is configured to receive the correlation tone;
wherein the processor is configured to detect a start point of a reception of the first correlation tone;
wherein the first sound sensing unit is configured to receive, a second correlation tone; wherein the second correlation tone is played by a second sound output unit in response to a reception, by a second sound sensing unit, of the first correlation tone;
wherein the processor is configured to detect a start point of a reception of the second correlation tone;
wherein the first sound sensing unit is configured to receive information about a processing time of the second device;
wherein the processor is configured to:
calculate a timing difference between (i) the start point of the reception of the second correlation tone, and (ii) the start point of the reception of the first correlation tone; and
determine the distance between the first device and the second device based on a difference between the timing difference and the processing time of the second device; and wherein the second sound sending unit and the second sound output unit belong to the second device.

14. A non-transitory computer program product for measuring a distance between a first device and a second device, wherein the non-transitory computer program product stores instructions for: playing, by a first sound output unit, a first correlation tone; receiving, by a first sound sensing unit, the correlation tone; detecting a start point of a reception of the first correlation tone; receiving, by the first sound sensing unit, a second correlation tone; wherein the second correlation tone is played by a second sound output unit in response to a reception, by a second sound sensing unit, of the first correlation tone; detecting a start point of a reception of the second correlation tone; receiving, by the first sound sensing unit, information about a processing time of the second device; calculating, by a first processing unit, a timing difference between (i) the start point of the reception of the second correlation tone, and (ii) the start point of the reception of the first correlation tone; and determining the distance between the first device and the second device based on a difference between the timing difference and the processing time of the second device; and wherein the first processing unit, the first sound sensing unit and the first sound output unit belong to the first device; and wherein the second sound sending unit and the second sound output unit belong to the second device.

15. The non-transitory computer readable according to claim 14 that stores instructions for playing by the first sound output unit information about at least one out of the timing difference and the distance between the first and second devices.
